# EUROPEAN PATENT SPECIFICATION

(11) **EP 3 438 551 B1**
(45) Date of publication and mention of the grant of the patent: **08.10.2025**
(21) Application number: 17184163.8
(22) Date of filing: 01.08.2017
(51) Int. Cl.: F24C 15/20, F24C 7/08, H04L 12/28, H04L 45/00, H04L 67/00

(54) **REMOTE CONTROL SYSTEM FOR CONTROLLING A KITCHEN HOOD**
FERNSTEUERUNGSSYSTEM ZUR STEUERUNG EINER KÜCHENABZUGSHAUBE
SYSTÈME DE COMMANDE À DISTANCE POUR COMMANDER UNE HOTTE DE CUISINE

(43) Date of publication of application: 06.02.2019
(73) Proprietor: ELECTROLUX APPLIANCES AKTIEBOLAG, 105 45 Stockholm (SE)
(72) Inventor: WUNDLING, Holger, 91541 Rothenburg ob der Tauber (DE); HOFFMANN, Harald, 91541 Rothenburg ob der Tauber (DE)
(74) Representative: Electrolux Group Patents

(56) References cited:
- EP-A2- 1 010 949
- EP-B1- 1 010 949
- DE-A1- 102014 220 273
- DE-A1- 102015 220 830
- DE-U1- 20 317 217
- US-A1- 2017 205 077

## Description

The present invention relates to a remote control system which is configured to control a kitchen hood.

A kitchen hood is often controlled by a user interface of a corresponding cooking hob. The suction activity of the kitchen hood may depend on the cooking process or cooking level performed on the cooking hob. Typically, the communication between the cooking hob and the kitchen hood is performed by an infrared connection. A control of the kitchen hood from a great distance is not provided.

US 2017/0205077 A1 discloses an electric stove comprising a communication unit supporting NFC, RFID, ZigBee, Bluetooth and WiFi protocols for wireless communication with external devices such as a cooking utensil, a stove hood and mobile devices. The communication unit is coupled to a controller of the stove and is configured to allow the stove to communicate wirelessly with the external devices.

From DE 203 17 217 U1 an exhaust hood is known which is wire-connected or wirelessly coupled to a cooker or a cooking hob. The exhaust hood is controllable by control elements arranged at the cooker or cooking hob. Alternatively, a remote control device may be attached or attachable at the cooker or cooking hob which controls directly the exhaust hood by means of wireless communication.

DE 10 2014 220 273 A1 discloses a method for determining a temperature by means of an infrared sensor arranged above a cooking hob and directed to the cooking hob, wherein the temperature of a food item positioned on the cooking hob is identified. The temperature sensor may be arranged at an exhaust hood positioned above the cooking hob. The sensed temperature data are transmitted to the cooking hob via wireless connection.

It is an object of the present invention to provide a remote control system which is configured to control a kitchen hood, which allows the control of the kitchen hood from a great distance by low complexity.

The object is achieved by the remote control system which is configured to control a kitchen hood according to claim 1.

According to the present invention a remote control system which is configured to control a kitchen hood is provided, wherein:
- the remote control system comprises the kitchen hood and at least one cooking appliance,
- the remote control system comprises a router and at least one remote device,
- the router is connected or connectable to the at least one cooking appliance via a first connection, and
- the remote device is connected or connectable to the router via a second connection, and
- the cooking appliance is connected to the kitchen hood via a third connection,
- so that the kitchen hood is controllable by the remote device via the router and the cooking appliance.

The main idea of the present invention is the remote control of the kitchen hood by the remote device via the router and the cooking application. A connection between the cooking application and the kitchen hood, which usually is already present, may be used. A further connection between the remote device and the cooking application is provided by the first and second connections. Thus, the connection from the remote device to the kitchen hood is realisable by low complexity.

Preferably, the first connection between the router and the at least one cooking appliance is a local area network (LAN) connection or a wireless local area network (WLAN) connection.

For example, the second connection between the at least one remote device and the router is a wireless local area network (WLAN). The remote device controls the kitchen hood by sending signals to the cooking application via the wireless local area network (WLAN) and/or the local area network (WLAN), wherein said signals are converted by the cooking appliance, e.g. by the user interface of said cooking appliance, and sent to the kitchen hood.

In particular, the connection between the cooking appliance and the kitchen hood is a wireless connection.

Usually, the connection between the kitchen hood and the cooking appliance may be an infrared connection. Often, an infrared connection between the cooking application and the kitchen hood is already present.

Alternatively, the third connection between the cooking appliance and the kitchen hood is a wired connection. Sometimes, the wired connection between the cooking appliance and the kitchen hood is already present.

Further, the wireless connection between the kitchen hood and the cooking appliance may be a unidirectional connection from the cooking appliance to the kitchen hood.

For example, the cooking appliance is a cooking hob.

Preferably, the remote device is a smartphone, a tablet, a notebook or the like.

Moreover, the first connection and/or the second connection may be Wi-Fi connections.

In particular, the remote device includes application software for controlling the kitchen hood.

Additionally, the remote device may include application software for controlling the at least one cooking appliance.

Further, the cooking appliance may include at least one converter for converting signals from the remote device into signals being compatible for the third connection from said cooking appliance to the kitchen hood.

For example, the converter is an integrated part of a user interface of the cooking appliance.

Alternatively or additionally, the converter is an integrated part of a control unit of the cooking appliance.

Novel and inventive features of the present invention are set forth in the appended claims.

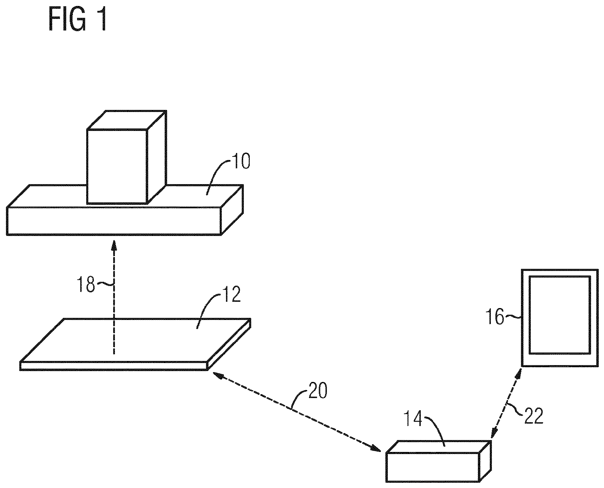

The present invention will be described in further detail with reference to the drawing, in which
- FIG 1: illustrates a schematic perspective view of a remote control system for controlling a kitchen hood according to a preferred embodiment of the present invention.

FIG 1 illustrates a schematic perspective view of a remote control system for controlling a kitchen hood 10 according to a preferred embodiment of the present invention.

The remote control system comprises the kitchen hood 10, a cooking appliance 12, a router 14 and a remote device 16. In this example, the cooking appliance 12 is a cooking hob 12. In particular, the remote device 16 is a smartphone, a tablet, a notebook or the like.

In this example, the kitchen hood 10 and the cooking hob 12 are connected via an infrared connection 18. In general, the kitchen hood 10 and the cooking hob 12 are connected via an arbitrary connection 18. Often, said connection 18 is already present between the cooking hob 12 and the kitchen hood 10. Preferably, the infrared connection 18 is a unidirectional connection from the cooking hob 12 to the kitchen hood 10. Alternatively, another arbitrary conventional connection, e.g. a wired connection, between the kitchen hood 10 and the cooking hob 12 may be used. The cooking hob 12 is connected to the router 14 via a first connection 20. Preferably, the first connection 20 is a local area network (LAN) connection. Alternatively, the cooking hob 12 and the router 14 may be connected via a wireless local area network (WLAN) connection. Further, the remote device 16 is connected to the router 14 via a second connection 22. Preferably, the second connection 22 is a wireless local area network (WLAN) connection. In particular, the first connection 20 and/or the second connection 22 are Wi-Fi connections.

The remote control of the kitchen hood 10 is performed by the remote device 16 via the cooking hob 12. The remote device 16 controls the kitchen hood 10 by sending signals to the cooking application 12 via the wireless local area network (WLAN) and/or the wireless local area network (WLAN). Said signals are sent via the second connection 22 to the router 14 and via the first connection 20 to the cooking hob 12. Then, the signals are converted by the cooking hob 10. In particular, the signals are converted by a user interface and/or by a control unit of said cooking hob 12. The cooking hob 12 may include a converter for converting the signals from the remote device 16 into signals being compatible for the connection 18 from said cooking hob 12 to the kitchen hood 10. At last, the converted signals are sent to the kitchen hood 10 via the infrared connection 18.

The present invention uses the infrared connection 18, which may be already present between the cooking hob 12 and the kitchen hood 10. Alternatively, the present invention may use another arbitrary conventional connection between the kitchen hood 10 and the cooking hob 12, e.g. a wired connection between the kitchen hood 10 and the cooking hob 12. It is not necessary that the kitchen hood 10 has to be connected to the wireless local area network (WLAN) or the local area network (LAN). The infrared connection 18 between the cooking hob 12 and the kitchen hood 10 is realised by low costs, so that the remote control system for the kitchen hood 10 according to the present invention can be provided by low complexity.

Although an illustrative embodiment of the present invention has been described herein with reference to the accompanying drawing, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

## Claims

1. A remote control system which is configured to control a kitchen hood (10), wherein:
- the remote control system comprises the kitchen hood (10) and at least one cooking appliance (12),
- the remote control system comprises a router (14) and at least one remote device (16),
- the router (14) is connected or connectable to the at least one cooking appliance (12) via a first connection (20),
- the remote device (16) is connected or connectable to the router (14) via a second connection (20), and
- the cooking appliance (12) is connected to the kitchen hood (10) via a third connection (18),
- so that the kitchen hood (10) is controllable by the remote device (16) via the router (14) and the cooking appliance (12).

2. The remote control system according to claim 1,
**characterised in that**
the first connection (20) between the router (12) and the at least one cooking appliance (12) is a wireless local area network (WLAN) connection or a local area network (LAN) connection.

3. The remote control system according to claim 1 or 2,
**characterised in that**
the second connection (22) between the at least one remote device (16) and the router (12) is a wireless local area network (WLAN).

4. The remote control system according to any one of the preceding claims,
**characterised in that**
the third connection (18) between the cooking appliance (12) and the kitchen hood (10) is a wireless connection.

5. The remote control system according to claim 4,
**characterised in that**
the third connection (18) between the cooking appliance (12) and the kitchen hood (10) is an infrared connection.

6. The remote control system according to any one of the claims 1 to 3,
**characterised in that**
the third connection (18) between the cooking appliance (12) and the kitchen hood (10) is a wired connection.

7. The remote control system according to any one of the preceding claims,
**characterised in that**
the connection between the cooking appliance (12) and the kitchen hood (10) is a unidirectional connection from the cooking appliance (12) to the kitchen hood (10).

8. The remote control system according to any one of the preceding claims,
**characterised in that**
the cooking appliance (12) is a cooking hob (12).

9. The remote control system according to any one of the preceding claims,
**characterised in that**
the remote device (16) is a smartphone, a tablet, a notebook or the like.

10. The remote control system according to any one of the preceding claims,
**characterised in that**
the first connection (20) and/or the second connection (22) are Wi-Fi connections.

11. The remote control system according to any one of the preceding claims,
**characterised in that**
the remote device (16) includes application software for controlling the kitchen hood (10).

12. The remote control system according to any one of the preceding claims,
**characterised in that**
the remote device (16) includes application software for controlling the at least one cooking appliance (12).

13. The remote control system according to any one of the preceding claims,
**characterised in that**
the cooking appliance (12) includes at least one converter for converting signals from the remote device (16) into signals being compatible for the third connection (18) from said cooking appliance (12) to the kitchen hood (10).

14. The remote control system according to claim 13,
**characterised in that**
the converter is an integrated part of a user interface of the cooking appliance (12).

15. The remote control system according to claim 13 or 14,
**characterised in that**
the converter is an integrated part of a control unit of the cooking appliance (12).

## Patentansprüche

1. Fernsteuerungssystem, das dafür ausgelegt ist, eine Küchenabzugshaube (10) zu steuern, wobei:
- das Fernsteuerungssystem die Küchenabzugshaube (10) und mindestens ein Kochgerät (12) umfasst,
- das Fernsteuerungssystem einen Router (14) und mindestens ein entfernte Vorrichtung (16) umfasst,
- der Router (14) über eine erste Verbindung (20) mit dem mindestens einen Kochgerät (12) verbunden oder verbindbar ist,
- die entfernte Vorrichtung (16) über eine zweite Verbindung (20) mit dem Router (14) verbunden oder verbindbar ist und
- das Kochgerät (12) über eine dritte Verbindung (18) mit der Küchenabzugshaube (10) verbunden ist,
- so dass die Küchenabzugshaube (10) durch die entfernte Vorrichtung (16) über den Router (14) und das Kochgerät (12) steuerbar ist.

2. Fernsteuerungssystem nach Anspruch 1,
**dadurch gekennzeichnet, dass**
die erste Verbindung (20) zwischen dem Router (12) und dem mindestens einen Kochgerät (12) eine drahtlose Ortsnetz (WLAN, Wireless Local Area Network) -Verbindung oder eine Ortsnetz (LAN, Local Area Network) -Verbindung ist.

3. Fernsteuerungssystem nach Anspruch 1 oder 2,
**dadurch gekennzeichnet, dass**
die zweite Verbindung (22) zwischen der mindestens einen entfernten Vorrichtung (16) und dem Router (12) ein drahtloses Ortsnetz (WLAN) ist.

4. Fernsteuerungssystem nach einem der vorhergehenden Ansprüche,
**dadurch gekennzeichnet, dass**
die dritte Verbindung (18) zwischen dem Kochgerät (12) und der Küchenabzugshaube (10) eine drahtlose Verbindung ist.

5. Fernsteuerungssystem nach Anspruch 4,
**dadurch gekennzeichnet, dass**
die dritte Verbindung (18) zwischen dem Kochgerät (12) und der Küchenabzugshaube (10) eine Infrarot-Verbindung ist.

6. Fernsteuerungssystem nach einem der Ansprüche 1 bis 3,
**dadurch gekennzeichnet, dass**
die dritte Verbindung (18) zwischen dem Kochgerät (12) und der Küchenabzugshaube (10) eine verdrahtete Verbindung ist.

7. Fernsteuerungssystem nach einem der vorhergehenden Ansprüche,
**dadurch gekennzeichnet, dass**
die Verbindung zwischen dem Kochgerät (12) und der Küchenabzugshaube (10) eine unidirektionale Verbindung vom Kochgerät (12) zur Küchenabzugshaube (10) ist.

8. Fernsteuerungssystem nach einem der vorhergehenden Ansprüche,
**dadurch gekennzeichnet, dass**
das Kochgerät (12) ein Kochfeld (12) ist.

9. Fernsteuerungssystem nach einem der vorhergehenden Ansprüche,
**dadurch gekennzeichnet, dass**
die entfernte Vorrichtung (16) ein Smartphone, ein Tablet, ein Notebook oder dergleichen ist.

10. Fernsteuerungssystem nach einem der vorhergehenden Ansprüche,
**dadurch gekennzeichnet, dass**
die erste Verbindung (20) und/oder die zweite Verbindung (22) WiFi-Verbindungen sind.

11. Fernsteuerungssystem nach einem der vorhergehenden Ansprüche,
**dadurch gekennzeichnet, dass**
die entfernte Vorrichtung (16) Anwendungssoftware zum Steuern der Küchenabzugshaube (10) umfasst.

12. Fernsteuerungssystem nach einem der vorhergehenden Ansprüche,
**dadurch gekennzeichnet, dass**
die entfernte Vorrichtung (16) Anwendungssoftware zum Steuern des mindestens einen Kochgeräts (12) umfasst.

13. Fernsteuerungssystem nach einem der vorhergehenden Ansprüche,
**dadurch gekennzeichnet, dass**
das Kochgerät (12) mindestens einen Wandler zum Umwandeln von Signalen von der entfernten Vorrichtung (16) in Signale, die für die dritte Verbindung (18) vom Kochgerät (12) zur Küchenabzugshaube (10) kompatibel sind, umfasst.

14. Fernsteuerungssystem nach Anspruch 13,
**dadurch gekennzeichnet, dass**
der Wandler ein integrierter Bestandteil einer Benutzeroberfläche des Kochgeräts (12) ist.

15. Fernsteuerungssystem nach Anspruch 13 oder 14,
**dadurch gekennzeichnet, dass**
der Wandler ein integrierter Bestandteil einer Steuereinheit des Kochgeräts (12) ist.

## Revendications

1. Système de commande à distance qui est configuré pour commander une hotte (10) de cuisine :
- le système de commande à distance comportant la hotte (10) de cuisine et au moins un appareil (12) de cuisson,
- le système de commande à distance comportant un routeur (14) et au moins un dispositif distant (16),
- le routeur (14) étant relié ou pouvant être relié à l'appareil ou aux appareils (12) de cuisson par l'intermédiaire d'une première liaison (20),
- le dispositif distant (16) étant relié ou pouvant être relié au routeur (14) par l'intermédiaire d'une deuxième liaison (20), et
- l'appareil (12) de cuisson étant relié à la hotte (10) de cuisine par l'intermédiaire d'une troisième liaison (18),
- de sorte que la hotte (10) de cuisine peut être commandée par le dispositif distant (16) par l'intermédiaire du routeur (14) et de l'appareil (12) de cuisson.

2. Système de commande à distance selon la revendication 1,
**caractérisé en ce que**
la première liaison (20) entre le routeur (12) et l'appareil ou les appareils (12) de cuisson est une liaison par réseau local sans fil (WLAN) ou une liaison par réseau local (LAN).

3. Système de commande à distance selon la revendication 1 ou 2,
**caractérisé en ce que**
la deuxième liaison (22) entre le ou les dispositifs distants (16) et le routeur (12) est un réseau local sans fil (WLAN).

4. Système de commande à distance selon l'une quelconque des revendications précédentes,
**caractérisé en ce que**
la troisième liaison (18) entre l'appareil (12) de cuisson et la hotte (10) de cuisine est une liaison sans fil.

5. Système de commande à distance selon la revendication 4,
**caractérisé en ce que**
la troisième liaison (18) entre l'appareil (12) de cuisson et la hotte (10) de cuisine est une liaison par infrarouges.

6. Système de commande à distance selon l'une quelconque des revendications 1 à 3,
**caractérisé en ce que**
la troisième liaison (18) entre l'appareil (12) de cuisson et la hotte (10) de cuisine est une liaison filaire.

7. Système de commande à distance selon l'une quelconque des revendications précédentes,
**caractérisé en ce que**
la liaison entre l'appareil (12) de cuisson et la hotte (10) de cuisine est une liaison unidirectionnelle de l'appareil (12) de cuisson à la hotte (10) de cuisine.

8. Système de commande à distance selon l'une quelconque des revendications précédentes,
**caractérisé en ce que**
l'appareil (12) de cuisson est une table (12) de cuisson.

9. Système de commande à distance selon l'une quelconque des revendications précédentes,
**caractérisé en ce que**
le dispositif distant (16) est un ordiphone, une tablette, un bloc-notes électronique ou similaire.

10. Système de commande à distance selon l'une quelconque des revendications précédentes,
**caractérisé en ce que**
la première liaison (20) et/ou la deuxième liaison (22) sont des liaisons Wi-Fi.

11. Système de commande à distance selon l'une quelconque des revendications précédentes,
**caractérisé en ce que**
le dispositif distant (16) comprend un logiciel d'application destiné à commander la hotte (10) de cuisine.

12. Système de commande à distance selon l'une quelconque des revendications précédentes,
**caractérisé en ce que**
le dispositif distant (16) comprend un logiciel d'application destiné à commander l'appareil ou les appareils (12) de cuisson.

13. Système de commande à distance selon l'une quelconque des revendications précédentes,
**caractérisé en ce que**
l'appareil (12) de cuisson comprend au moins un convertisseur destiné à convertir des signaux provenant du dispositif distant (16) en signaux qui sont compatibles avec la troisième liaison (18) dudit appareil (12) de cuisson à la hotte (10) de cuisine.

14. Système de commande à distance selon la revendication 13,
**caractérisé en ce que**
le convertisseur fait partie intégrante d'une interface d'utilisateur de l'appareil (12) de cuisson.

15. Système de commande à distance selon la revendication 13 ou 14,
**caractérisé en ce que**
le convertisseur fait partie intégrante d'une unité de commande de l'appareil (12) de cuisson.
